# EUROPEAN PATENT SPECIFICATION

(11) **EP 0 332 589 B1**
(45) Date of publication and mention of the grant of the patent: **22.06.1994**
(21) Application number: 89830096.7
(22) Date of filing: 07.03.1989
(51) Int. Cl.: H02K 15/04

(54) **Method and equipment for the automatic change-over of the wire supplied to a coil winder for forming the windings of dynamo-electric machines**
Verfahren und Ausrüstung für den automatischen Übergang des an eine Wickelmaschine zugeführten Drahter, um die Wicklungen dynamoelektrischer Maschinen zu formen
Méthode et équipement pour le transfert automatique du fil fourni à une bobineuse pour former les enroulements de machines dynamoélectrques

(30) Priority: 10.03.1988 IT 6719788
(43) Date of publication of application: 13.09.1989
(73) Proprietor: AXIS S.p.A., I-50028 Tavarnelle Val di Pesa (Firenze) (IT)
(72) Inventor: Barrera, Giorgio, I-10096 Leumann (Torino) (IT)
(74) Representative: Lotti, Giorgio

(56) References cited:
- EP-A- 0 161 573
- FR-A- 1 146 262
- FR-A- 2 418 566
- US-A- 4 157 932
- US-A- 4 388 952

## Description

The present invention relates to coil winders for forming the windings of dynamo-electric machines.

According to a prior art, the copper wires used in such machines for forming the coils of the windings are unwound from spools of wires housed in drums provided with upper lids in the shape of upside-down funnels each with a central aperture from which the wire projects. When the spools of wire which supplies the coil winder is exhausted, or when it is necessary to change the type of wire to form a different winding, it is necessary to replace the supply spool previously used with a new spool and to insert the starting end of the wire of the new spool into the coil winder in order to allow it to be started. All these operations normally are carried out manually to the detriment of the efficiency and speed of production.

A further prior art is disclosed in document EP-A-0161573 which shows a method and a device for winding wire, taken from spools, to form coils for electrical machines in which, before the end of the wire on a first spool, the wire is cut by means of a cutter attached to a connection unit and to a flexible wire channel which feeds the wire to the winding machine.

The cutter and the flexible wire channel are then translated to a new spool and the end of the wire in the flexible channel is connected to the free end of the wire in the new spool.

It can be understood that with this method and device the cycle of the machine must be interrupted for the time necessary to cut the first wire, to translate said wire to the new spool and to connect the cut wire to the free end of the wire in the new spool. Moreover, the machine requires a bracket including guide means for translating the connecting means, the cutting means and the flexible wire channel; this assembly is very costly and need to guarantee extremely precise alignment of the wire with the new spool obtained by said translation.

In order to avoid this disadvantage, the present invention provides, in a coil winder for forming the windings of a dynamoelectric machine, an equipment for the automatic change over from the wire of a first spool wire which has run out to the wire of a second spool required for further winding comprising means for connecting the two wires rigidly together; means for guiding the wire to the winder to feed a wire for winding the coils and means for drawing the connected wires through the winder in order to substitute the first wire with the second wire for winding; the equipment being characterized by: said means for connecting the two wires being provided with an operative condition to join the two wires in a predetermined zone and an inoperative condition which allows passage, through said same predetermined zone, of the wire coming from the first spool being fed to the winder for winding; and of the wire coming from the second spool during preparation to join the two wires; guide means for the wire coming from the first spool so that said wire can be fed to the winder through said predetermined zone; guide means for the wire coming from the second spool so that said wire can be fed through said predetermined zone during preparation for joining the wires.

When it is necessary to replace the wire supplied to the coil winder, for example, when the spool of wire previously used has been exhausted, or when it is necessary to change the type of wire to form a different winding, the coil winder is stopped and the wire previously used is cut by means of the cutting means. The two supply wires are then connected rigidly together by means of the connecting means (adapted, for example, to form a weld or a seam with the two wires) after which the coil winder is restarted so as to cause the introduction of the starting end of the new wire to be used into the machine by being drawn by the off-cut of the previously-used wire remaining in the coil winder. When this off-cut leaves the machine, the coil winder is stopped and the off-cut cut off. The machine may then be started to carry out a new operating cycle with the new supply wire.

A further object of the present invention is a method for the automatic change-over of the supply wire with the use of the equipment described above, as claimed in claim 1.

Naturally, the various devices forming parts of the equipment may be controlled automatically. Preferably, a wire-detecting device with an associated electrical mocroswitch is provided at the outlet of the spool-containing drum for providing an automatic indication of the exhaustion of the wire.

Further characteristics and advantages of the present invention will become apparent from the description which follows with reference to the appended drawings, in which:
Figure 1 is a schematic view of equipment according to the invention,
Figure 2 is a partial cross-section on an enlarged scale, of an embodiment of a cutting device which does not form part of the equipment of the invention, and
Figure 3 is an elevational view of an embodiment of a further device forming part of the equipment of the invention.

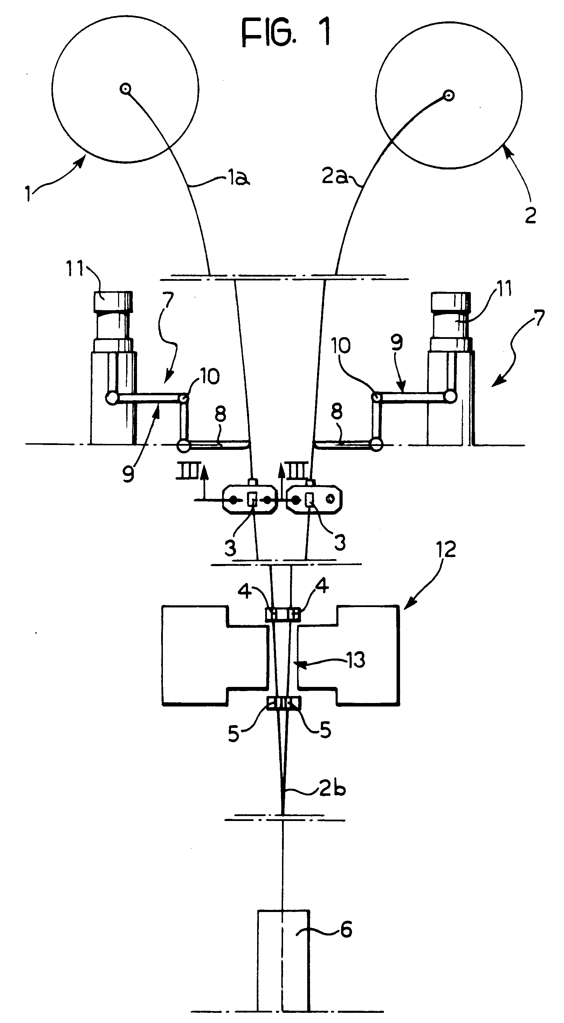

With reference to Figure 1, references 1 and 2 indicate two spools of copper wire for supplying wire selectively to a coil winder (not illustrated) for forming the winding of a dynamo-electric machine. In the usual manner, each supply spool is housed in a cylindrical drum provided at its top with a lid in the form of an upside-down funnel with a central aperture from which the wire (indicated 1a and 2a respectively) projects. The equipment includes guide devices 3, 4, 5 through which each of the two wires 1a, 2a may be guided to the input of the coil winder, indicated 6 in Figure 1.

Figure 1 illustrates the condition in which the wire 1a is inserted in the coil winder, while the wire 2a is in a waiting position with its starting end 2b located slightly downstream of a respective guide bush 5.

The equipment according to the invention further includes two cutting devices 7 located downstream of the supply spools 1, 2 and arranged to cut the wires 1a, 2a respectively. According to the embodiment shown schematically in Figure 1, each cutting device 7 includes a cutting blade 8 movable between a rest position and an operative position by means of a transmission constituted by an L-shaped lever 9 articulated at 10 to a fixed structure and driven by a hydraulic cylinder 11.

Downstream of the cutting devices there is a unit 12 for connecting the two wires 1a, 2a rigidly together at a zone 13. The unit 12 may, for example, be an ultrasonic welding unit, a unit for seaming the two copper wires or a unit for joining these wires by means of adhesive.

The equipment described above may be used in the following manner.

Supposing one starts in the condition illustrated in Figure 1, the activation of the coil winder (not illustrated) causes the formation of a winding coil with the wire 1a which gradually unwinds from the supply spool 1. When it is necessary to replace the wire 1a by the wire 2a, for example, when the spool 1 is exhausted, or when it is necessary to form a winding with a different type of wire (in the latter case a wire 2a of the corresponding type will obviously be provided) it is necessary to stop the coil winder, after which one of the two cutting devices 11 is operated to cut the wire 1a. The unit 12 is then activated to connect the two wires in the zone 13, after which the coil winder is restarted so that the off-cut of the wire 1a which is still within it draws the starting end 2b of the wire 2a into the coil winder. When the off-cut of the wire 1a leaves the coil winder, the latter is stopped temporarily to allow the off-cut to be cut off, after which the operating cycle may be started so as to form a coil with the wire 2a. All the functions described above may obviously be controlled automatically. In this case, it is preferable to provide a wire-detecting device with an associated microswitch at the output of each supply drum in order to indicated automatically the exhaustion of the wire. This device is of known type and so the details of this device have been omitted from the drawings.

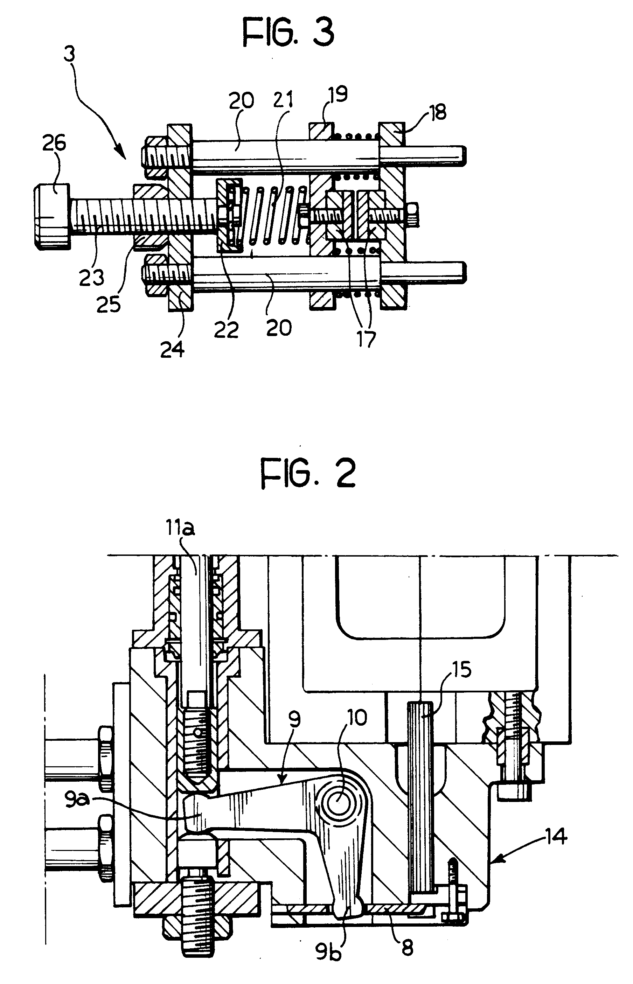

Figure 2 illustrates one embodiment of the cutting device 7. This device comprises a support structure 14 including a guide bush for the wire, indicated 15. The lever 9 is articulated at 10 to the support structure 14 and has nibs 9a, 9b at its ends which are operatively connected to the shaft 11a of the hydraulic cylinder 11 and the cutting blade 8.

Preferably, the guide devices 3 are in the form of devices for the friction braking of the wire so as to ensure that the wire moves correctly when it is driven by the action of the coil winder. One embodiment of the brake device 3 is illustrated in Figure 3. The wire is guided between two pads of very hard material, indicated 17, formed so as to ensure that the coating of the wire is preserved. Two pads 17 are fixed respectively to a fixed plate 18 and to a plate 19 slidable on guide columns 20. The plate 19 is urged towards the fixed plate 18 by a helical spring 21 interposed between the plate 19 and a bearing member 22 the axial position of which may be adjusted. More particularly, the member 22 is carried at the end of a threaded shank 23 screwed into an auxiliary fixed plate 24 and locked by a nut 25. The axial position of the bearing member 22 and hence the load of the spring 21 may be modified by turning the head 26 of the threaded shank 23. The braking action exerted on the wire may thus be varied.

## Claims

1. In a coil winder for forming the windings of a dynamoelectric machine comprising: at least two spools (1, 2) of supply wire for selectively supplying wire (1a, 2a) to the coil winder (6), means (12) for connecting the two wires rigidly together and guide means (3, 4, 5) for guiding the wire to the winder for winding the coils, means for drawing the connected wires through the winder in order to substitute the first wire with the second wire for winding; the method for automatically changing over from the wire (1a) of a first spool wire (1) to the wire (2a) of a second spool (2) required to be introduced in the winder, being characterized in the following steps:
- providing said connection device (12) with an operative condition to join the two wires (1a, 2a) in a predetermined zone (13) and an inoperative condition which allows passage through said same predetermined zone (13) of the wire (1a) coming from the first spool (1), being fed to the winder for winding, and of the wire (2a) coming from the second spool (2) during preparation to join the two wires;
- guiding the wire (1a) coming from the first spool (1) so that said wire can be fed to the winder (6) through said predetermined zone (13);
- guiding the wire (2a) coming from the second spool (2) through said predetermined zone (13) in preparation for joining the wires;
- operating said connection means (12) to join the two wires (1a, 2a) rigidly in said predetermined zone (13).

2. The method of claim 1 wherein said steps of guiding said wires (1a, 2a) comprises: guiding the wires upstream (3) and downstream (4) with respect to said predetermined zone (13) for joining the wires.

3. The method of claim 1 further comprising the step of:
- cutting (7) the wire of the first spool (1) prior to drawing the wire of the second spool (2) through the winder (6).

4. the method of claim 3 wherein said cutting step is characterized by:
- cutting (7) the wire of the first spool (1) upstream with respect to said predetermined zone (13) for joining the wires.

5. The method of claim 1 wherein said steps for automatically changing over from the first spool of wire to the second spool of wire comprises the steps of:
- detecting when the first spool (1) of wire is running out in order to join said wires prior to running out of the first spool of wire.

6. In a coil winder for forming the windings of a dynamoelectric machine, an equipment for the automatic change over from the wire (1a) of a first spool wire (1) which has run out to the wire (2a) of a second spool (2) required for further winding comprising means (12) for connecting the two wires rigidly together, means for guiding the wire to the winder (6) to feed a wire for winding the coils and means for drawing the connected wires through the winder in order to substitute the first wire with the second wire for winding; the equipment being characterized by:
- said means (12) for connecting the two wires being provided with an operative condition to join the two wires in a predetermined zone (13) and an inoperative condition which allows passage, through said same predetermined zone, of the wire (1a) coming from the first spool (1) being fed to the winder (6) for winding; and of the wire (2a) coming from the second spool (2) during preparation to join the two wires;
- guide means (3) for the wire coming from the first spool so that said wire can be fed to the winder through said predetermined zone (13);
- guide means (3) for the wire coming from the second spool so that said wire can be fed through said predetermined zone (13) during preparation for joining the wires.

7. The apparatus of claim 6 wherein said equipment for guiding the wire further comprises:
- means (4) for guiding the wire of the first spool (1) along a first predetermined path upstream of said predetermined zone (13),
- means (4) for guiding the wire of the second spool (2) along a second predetermined path upstream of said predetermined zone (13),
- means (7) for cutting the wire of the first spool (1) along said first predetermined path, and
- means (7) for cutting the wire of the second spool along said second predetermined path.

## Patentansprüche

1. In einer Spulenwickelmaschine zum Formen der Wicklungen einer dynamoelektrischen Maschine umfassend: mindestens zwei Rollen (1, 2) mit Zuführdraht zum wahlweisen Zuführen von Draht (1a, 2a) zur Spulenwickelmaschine (6), Verbindungsmittel (12) zum starren Verbinden der zwei Drähte miteinander, Führungsmittel (3, 4, 5) zur Führung des Drahtes zur Spulenwickelmaschine zum Wickeln der Spulen, Mittel zum Ziehen der verbundenen Drähte durch die Spulenwickelmaschine, um den ersten Draht gegen den zweiten Draht zum Wickeln auszutauschen; das Verfahren zum automatischen Umstellen von dem Draht (1a) einer ersten Rolle (1) auf den Draht (2a) einer zweiten Drahtrolle (2), der in die Spulenwickelmaschine eingeführt werden muß, ist durch die folgenden Schritte gekennzeichnet:
- Ausstatten besagter Verbindungsmittel (12) mit einem Arbeitsmodus, um die zwei Drähte (1a, 2a) in einem vorbestimmten Bereich (13) zusammenzufügen, und mit einem Ruhemodus, der einen Durchlauf, durch den selben vorbestimmten Bereich (13) ermöglicht für den Draht (1a), der von der ersten Rolle (1) kommt und der zum Wickeln zur Spulenwickelmaschine zugeführt wird, und für den Draht (2a), der von der zweiten Drahtrolle (2) kommt, während der Vorbereitung um die zwei Drähte zusammenzufügen;
- Führen des Drahtes (1a), der von der ersten Rolle (1) kommt, so daß der Draht zur Spulenwickelmaschine (6) durch den vorbestimmten Bereich (13) zugeführt werden kann;
- Führen des Drahtes (2a), der von der zweiten Rolle (2) kommt, durch den vorbestimmten Bereich (13), um das Zusammenfügen der Drähte vorzubereiten;
- Betätigen des Verbindungsmittel (12), um die zwei Drähte (1a, 2a) starr in dem vorbestimmten Bereich (13) zusammenzufügen.

2. Verfahren nach Anspruch 1, bei dem die Verfahrensschritte des Führens der Drähte (1a, 2a) ein Führen der Drähte oberhalb (3) und unterhalb (4) bezüglich des vorbestimmten Bereiches (13) zum Zusammenfügen der Drähte umfassen.

3. Verfahren nach Anspruch 1, weiterhin den Verfahrensschritt umfassend:
- Trennen (7) des Drahtes von der ersten Rolle (1), bevor der Draht der zweiten Rolle (2) durch die Spulenwickelmaschine (6) gezogen wird.

4. Verfahren nach Anspruch 3, bei dem der Verfahrensschritt des Trennens gekennzeichnet ist durch:
- Trennen (7) des Drahtes der ersten Rolle (1) oberhalb des vorbestimmten Bereiches (13) zum Zusammenfügen der Drähte.

5. Verfahren nach Anspruch 1, bei dem die Verfahrensschritte zum automatischen Umstellen von der ersten Drahtrolle auf die zweite Drahtrolle die folgenden Verfahrensschritte umfaßt:
- Anzeigen, sobald die erste Drahtrolle (1) zu Ende geht, um die Drähte vor dem Zuendegehen der ersten Drahtrolle zusammenzufügen.

6. Einrichtung in einer Spulenwickelmaschine zum Formen der Wicklungen einer dynamoelektrischen Maschine zum automatischen Umstellen von dem Draht (1a) einer ersten Drahtrolle (1), die zu Ende gegangen ist, auf den Draht (2a) einer zweiten Drahtrolle (2), die für weiteres Wickeln erforderlich ist, umfassend Verbindungsmittel (12) zum starren Verbinden der zwei Drähte miteinander, Mittel zum Führen des Drahtes zur Spulenwickelmaschine (6), um einen Draht zum Wickeln der Spulen zuzuführen, und Mittel zum Ziehen der verbundenen Drähte durch die Spulenwickelmaschine, um den ersten Draht gegen den zweiten Draht zum Wickeln auszutauschen; die Einrichtung ist gekennzeichnet durch:
- besagte Verbindungsmittel (12) zum Verbinden der zwei Drähte, die mit einem Arbeitsmodus ausgestattet sind, um die zwei Drähte in einem vorbestimmten Bereich (13) zusammenzufügen, und die mit einem Ruhemodus ausgestattet sind, die einen Durchlauf durch den selben vorbestimmten Bereich ermöglicht für den Draht (1a), der von der ersten Rolle (1) kommt und der zum Wickeln zur Spulenwickelmaschine (6) zugeführt wird, und für den Draht (2a), der von der zweiten Rolle (2) kommt, während der Vorbereitung um die zwei Drähte zusammenzufügen;
- Führungsmittel (3) für den Draht, der von der ersten Drahtrolle kommt, so daß der Draht durch den vorbestimmten Bereich (13) zur Spulenwickelmaschine geführt werden kann;
- Führungsmittel (3) für den Draht, der von der zweiten Rolle kommt, so daß der Draht durch den vorbestimmten Bereich (13) geführt werden kann, während der Vorbereitung zum Zusammenfügen der Drähte.

7. Einrichtung nach Anspruch 6, bei welcher die Vorrichtung zum Führen des Drahtes weiterhin umfaßt:
- Mittel (4) zum Führen des Drahtes der ersten Rolle (1) entlang einer ersten vorbestimmten Bahn oberhalb des vorbestimmten Bereiches (13),
- Mittel (4) zum Führen des Drahtes der zweiten Rolle (2) entlang einer zweiten vorbestimmten Bahn oberhalb des vorbestimmten Bereiches (13),
- Mittel (7) zum Trennen des Drahtes der ersten Rolle (1) entlang der ersten vorbestimmten Bahn und
- Mittel (7) zum Trennen des Drahtes der zweiten Rolle entlang der zweiten vorbestimmten Bahn.

## Revendications

1. Dans une machine de bobinage pour former des enroulements de machine dynamo-électriques comprenant: au moins deux dévidoirs (1, 2) d'alimentation de fil pour alimenter le fil de manière sélective (1a, 2a) dans la machine de bobinage (6), un moyen de raccordement (12) pour connecter les deux fils ensemble de façon rigide et un moyen de guidage (3, 4, 5) pour guider le fil vers la machine de bobinage pour bobiner les enroulements, un moyen pour tirer les fils raccordés ensemble au travers de la machine de bobinage pour remplacer le premier fil par le second fil pour le bobinage; un procédé de remplacement automatique du fil (1a) du premier dévidoir (1) par le fil (2a) du second dévidoir devant être introduit dans la machine de bobinage, caractérisé par les étapes suivantes:
- mise en mode actif dudit dispositif de raccordement (12) pour raccorder les deux fils (1a, 2a) dans une zone prédéterminée (13), et mise en mode de repos pour permettre le libre passage du fil (1a) au travers de cette même zone prédéterminée (13) du fil (1a) venant du premier dévidoir (1), amené dans la machine à bobiner pour effectuer le bobinage, et du fil (2a) venant du second dévidoir (2) pendant la préparation du raccordement des deux fils;
- guidage du fil (1a) venant du premier dévidoir (1) pour que ledit fil puisse être amené à la machine de bobinage (6) après avoir traversé la zone prédéterminée (13);
- guidage du fil (2a) venant du second dévidoir (2) au travers de la zone prédéterminée (13) en préparation du raccordement des fils;
- actionnement dudit moyen de raccordement (12) pour raccorder les deux filS (1a, 2a) de façon rigide à l'intérieur de ladite zone prédéterminée (13).

2. Procédé selon la revendication 1, comportant les étapes de guidage desdits fils (1a, 2a), et qui comprend: le guidage des fils en amont (3) et en aval (4) par rapport à ladite zone prédéterminée (13) pour raccorder les fils.

3. Procédé selon la revendication 1, comprenant en outre l'étape de:
- coupe (7) du fil du premier dévidoir (1), avant le tirage du fil du second dévidoir (2) pour lui faire traverser la machine de bobinage (6).

4. Procédé selon la revendication 3, dans lequel l'étape de coupe du fil est caractérisée par:
- la coupe (7) du fil du premier dévidoir (1) en amont par rapport à ladite zone prédéterminée (13) pour raccorder les deux fils.

5. Procédé selon la revendication 1, dans lequel lesdites étapes de remplacement automatique du premier dévidoir de fil par le second dévidoir de fil comprennent l'étape de:
- détection d'approche de fin de fil dans le dévidoir (1) pour permettre de raccorder lesdits deux fils avant que le fil du premier dévidoir ne soit complètement épuisé.

6. Dans une machine de bobinage pour former des enroulements de machine dynamo-électrique, un équipement de remplacement automatique du fil (1a) d'un premier dévidoir de fil (1) qui est épuisé par le fil (2a) d'un second dévidoir (2) nécessaire pour continuer le bobinage, comprenant un moyen (12) de raccordement des deux fils de façon rigide, un moyen de guidage du fil vers la machine de bobinage (6) pour amener le fil nécessaire pour bobiner les enroulements, et un moyen pour tirer les fils raccordés au travers de la machine de bobinage pour remplacer le premier fil par le second fil de bobinage; l'équipement étant caractérisé par:
- ledit moyen (12) de raccordement des deux fils ayant un mode actif pour raccorder les deux fils dans une zone prédéterminée (13) et un mode repos qui permet (i) le libre passage du fil (1a) au travers de ladite zone prédéterminée (13), ledit fil (1a) venant du dévidoir (1) étant amené à la machine de bobinage (6) pour le bobinage, et (ii) le libre passage du fil (2a) venant du second dévidoir (2) pendant la préparation du raccordement des deux fils;
- un moyen de guidage (3) pour le fil venant du premier dévidoir, agencé de telle façon que ledit fil puisse être amené à la machine de bobinage au travers de ladite zone prédéterminée (13);
- un moyen de guidage (3) pour le fil venant du second dévidoir, agencé de telle façon que ledit fil puisse être amené au travers de ladite zone prédéterminée (13) pendant la préparation du raccordement des fils.

7. Appareil selon la revendication 6, dans lequel ledit équipement de guidage du fil comprend en outre:
- un moyen (4) de guidage du fil du premier dévidoir (1) le long d'une première trajectoire prédéterminée en amont de la zone prédéterminée (13),
- un moyen (4) de guidage du fil du second dévidoir(2) le long d'une seconde trajectoire prédéterminée en amont de ladite zone prédéterminée (13),
- un moyen (7) pour couper le fil du premier dévidoir (1) le long de la première trajectoire prédéterminée, et
- un moyen (7) pour couper le fil du second dévidoir le long de la seconde trajectoire prédéterminée.
